# EUROPEAN PATENT APPLICATION

(11) **EP 4 272 921 A1**
(43) Date of publication of application: **08.11.2023**
(21) Application number: 23171274.6
(22) Date of filing: 03.05.2023
(51) Int. Cl.: B29B 11/08, B29D 12/02

(54) **BLANK FOR THE PRODUCTION OF EYEGLASSES AND METHOD FOR ITS PROVISION**

(30) Priority: 03.05.2022 IT 202200008885
(71) Applicant: Il Sol di Stramare Euro, 31049 Valdobbiadene (IT); Chiprint Occhiali Srls Unipersonale, 32040 Lozzo Di Cadore BL (IT); Mabel S.r.l., 32010 Perarolo Di Cadore (IT)
(72) Inventor: STRAMARE, Euro, 31049 Valdobbiadene, Frazione San Vito TV (IT)
(74) Representative: Modiano, Micaela Nadia

(57) **Abstract**

A blank (10) for the production of eyeglasses, made of cellulose acetate, constituted by a strip (11) having a rectangular profile and dimensions that are substantially comparable with those of a front (1) of a frame (2) for eyeglasses, the blank (11) being injection-molded and having regions (12, 13a, 13b) with different thickness.

## Description

The present invention relates to a blank for the production of eyeglasses.

The invention also relates to a method for providing a blank for the production of eyeglasses.

Nowadays eyeglasses are known and widespread that have a frame for the lenses which is made of cellulose acetate.

Cellulose acetate is a material that is per se known and has been widely used in the eyewear sector for many years.

It is a polymer of natural origin which is obtained starting from wood fiber or discarded wood material, or from cotton fibers with the addition of stabilizers and plasticizers.

This polymer can assume a vast range of colors, textures and motifs.

Frames made of cellulose acetate can be made using two different methods: by cutting an extruded block of acetate sheets, or by using cellulose acetate in granular form, which is liquefied at high temperatures (in the order of 260°C) and then injection molded to make slabs.

In order to provide a frame for eyeglasses, the slabs thus obtained are then cut to shape strips of dimensions approximating to those of a frame for eyeglasses.

These strips are then glued onto each other in order to obtain a blank that has a thickness that is sufficient to then be milled, usually using a numerically controlled machine, in order to obtain the front of the frame, by forming:
- the rims for supporting the lenses,
- the bridge, or nose, between the rims,
- the nosepads, or nosepiece, on the inward edge of the two rims at/near the bridge.

At the longitudinal ends of the front, on the outward edges of the two rims, a seat is made and a hinge is inserted for articulating to a respective temple, made separately, and connected to the front using that hinge.

Alternatively, the bridge and the nosepads are made separately and then glued onto the base strip used for the rims.

Such conventional techniques have a number of drawbacks.

First of all, in order to provide the front of the frame it is necessary to cut a slab of cellulose acetate into strips, resulting both in long processing times and in the need for considerable storage spaces to contain the slabs until such time as they are machined.

Furthermore, in order to ensure that the blank has a sufficient thickness to be milled in order to provide the front, and in particular a sufficient thickness of the regions of the bridge and of the portions of the rims where the hinge for articulation to the temples will be inserted, it is necessary to bond two or more strips with adhesive on to each other and this entails lengthy procedures, the use of adhesives and solvents with consequent atmospheric pollution, and a considerable waste of material, in the form of swarf, during the milling.

Also, in order to be able to associate the temples with the front, it is necessary to provide insertion seats for the hinges in the front, and this entails a procedure for providing the frame that is lengthy and inconvenient.

The aim of the present invention is to provide a blank for the production of eyeglasses and a method for its provision that are capable of improving the known art in one or more of the above-mentioned aspects.

Within this aim, an object of the invention is to provide a blank for the production of eyeglasses and a method for its provision that make it possible to provide the frame, and in particular the front, more simply and more rapidly than similar, conventional blanks.

Another object of the invention is to provide a blank for the production of eyeglasses and a method for its provision that require less storage space for storing the materials prior to their processing.

A further object of the invention is to provide a blank for the production of eyeglasses and a method for its provision that generate less waste of material and also less environmental pollution with respect to similar methods and conventional blanks.

Another object of the present invention is to overcome the drawbacks of the known art in a different manner to any existing solutions.

Another object of the invention is to provide a blank for the production of eyeglasses and a method for its provision that are highly reliable, easy to implement and of low cost.

This aim and these and other objects which will become better apparent hereinafter are achieved by a blank for the production of eyeglasses, made of cellulose acetate, constituted by a strip having a rectangular profile and dimensions that are substantially comparable with those of a front of a frame for eyeglasses, said blank being characterized in that said strip is injection-molded and has regions with different thickness.

This aim and these and other objects which will become better apparent hereinafter are also achieved by a method for providing such a blank for the production of eyeglasses.

Further characteristics and advantages of the invention will become more apparent from the description of some preferred, but not exclusive, embodiments of a blank for the production of eyeglasses and a method for its provision, according to the invention, which are illustrated for the purposes of non-limiting example in the accompanying drawings wherein:
- Figure 1 shows a blank for the production of eyeglasses according to the invention;
- Figure 2 shows a component of the equipment for a method for providing a blank for the production of eyeglasses, with some of its elements;
- Figure 3 shows the component of Figure 2 in a possible configuration thereof;
- Figure 4 is an overall view of a frame for eyeglasses obtained with the blank of Figure 1.

With reference to the figures, a blank for the production of eyeglasses, according to the invention, is generally designated by the reference numeral 10.

The blank 10 is made of cellulose acetate and is suitable for providing the front 1 of a frame 2 for eyeglasses.

The blank 10 is injection-molded and is constituted by a strip 11 having a rectangular profile and dimensions that are substantially comparable with those of a front 1 of a frame 2 for eyeglasses.

One of the peculiarities of the invention consists in that the strip 11 has regions with different thicknesses.

In particular, considering the longitudinal direction of the strip 11, the strip has at least one central raised portion 12.

This central raised portion 12 has a rectangular contour and a transverse extension that is equal to the transverse extension of the strip 11.

In the present description, the terms "transverse extension" mean the extension in the transverse direction, i.e. the extension perpendicular to the longitudinal direction of the strip 11, and co-planar with it.

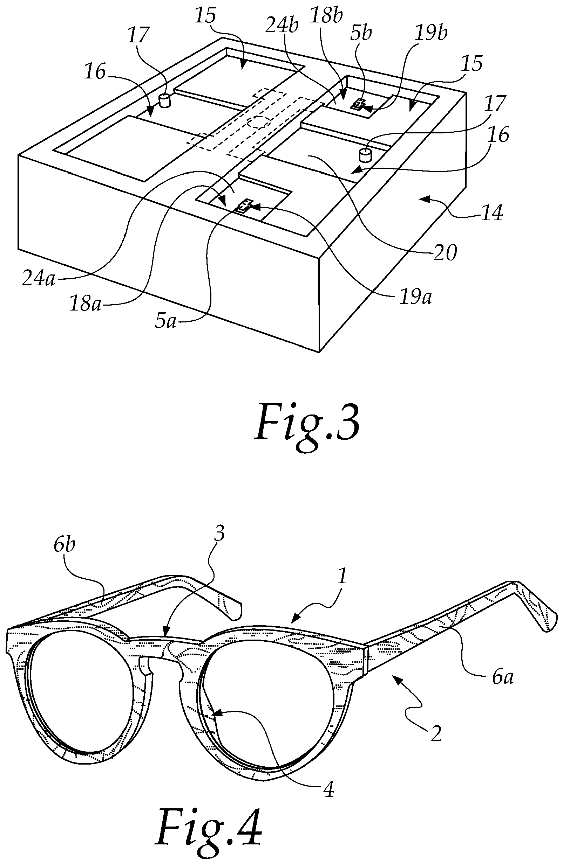

The central raised portion 12 has a thickness that is sufficient to obtain the bridge 3 and the nosepads 4 (of which only one is indicated in Figure 4) of the frame 2 for eyeglasses by removal of material.

In another embodiment, not shown in the figures, the central raised portion 12 has a hole that passes through its thickness which is adapted for the insertion of a centering element of a numerically controlled machine for the subsequent milling operations during the step of providing the front 1 of the frame 2.

Considering the longitudinal direction of the strip 11, the strip has two opposite and mirror-symmetrical corner raised portions 13a, 13b, each one at a corresponding longitudinal end of the strip 11, and extending from the same face from which the central raised portion 12 extends.

The corner raised portions 13a, 13b have a quadrangular contour and a transverse extension that is smaller than the transverse extension of the strip 11.

The corner raised portions 13a, 13b have a thickness that is sufficient to provide insertion seats for the hinges 5a, 5b for articulating the temples 6a, 6b to the front 1 of the frame 2 for eyeglasses.

In other embodiments, the central raised portion 12 has the same thickness as the corner raised portions 13a, 13b.

In other embodiments, not shown in the figures, the blank 10 comprises, at the corner raised portions 13a, 13b, the hinges 5a, 5b, partially embedded in the strip 11 and adapted for association with the temples 6a, 6b in order to provide the frame 2 for eyeglasses.

It should be noted that such a blank makes it possible to waste less material than similar, conventional blanks, by having a greater thickness only where it is necessary for subsequent operations to provide the frame.

It should also be noted that such a blank makes it possible to reduce the time required to provide the frame, since it is no longer necessary to cut a slab of acetate to measure, as the slab is already substantially to measure.

Another peculiarity of the invention is the method for providing the blank 10.

Such method consists of:
- injecting liquefied cellulose acetate into a mold which comprises two complementary and mated half-molds, of which a first half-mold 14 has at least one impression 15 having a substantially rectangular contour with dimensions that are compatible with those of the front 1 of the frame 2 for eyeglasses, the impression 15 having, considering its direction of longitudinal extension, at least one central recess 16 for the provision of the central raised portion 12 of the strip 11 that is shaped complementarily thereto,
- waiting for the solidification time of the cellulose acetate, thus obtaining the blank 10,
- opening the mold and extracting the blank 10.

The central recess 16 has a rectangular profile and a transverse extension that coincides with the transverse extension of the impression 15.

In the central recess 16 there can be a pin 17 for providing a hole that passes through the central raised portion 12 of the strip 11, as described previously.

Advantageously the impression 15 of the first half-mold 14 has, considering its direction of longitudinal extension, two opposite and mirror-symmetrical corner recesses 18a, 18b, for the provision of the corner raised portions 13a, 13b, of the strip 11, that are shaped complementarily thereto.

These corner recesses 18a, 18b are each arranged at a corresponding longitudinal end of the impression 15, have a quadrangular contour and a transverse extension that is smaller than the transverse extension of the impression 15.

Advantageously, these recesses 18a, 18b can have a seat 19a, 19b for the insertion of a hinge 5a, 5b for the association/articulation of a respective temple 6a, 6b with the front 1 of the frame 2 for eyeglasses, obtained from the blank 10.

With such a first half-mold 14, the method for providing the blank 10 includes a step of inserting the hinges 5a, 5b in the seats 19a, 19b of the corner recesses 18a, 18b, before the liquefied cellulose acetate is injected into the mold.

In this manner, once the cellulose acetate is solidified, a blank 10 is obtained that already incorporates the hinges 5a, 5b, thus reducing the number of operations necessary for producing the frame 2 for eyeglasses, and therefore making it a method of production that is faster and simpler than similar, conventional methods.

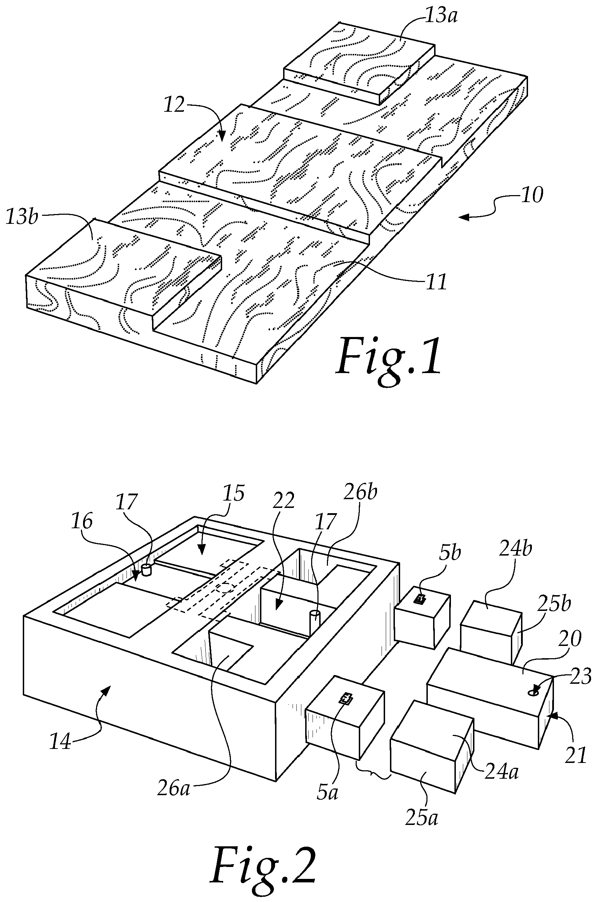

With particular reference to Figure 2, the bottom of the central recess 16 can be defined by the upper surface 19 of a corresponding first insert 20 which is inserted in a respective and complementarily-shaped first cavity 22 of the impression 15 of the first half-mold 14.

This first insert 20 can have a hole 23 for inserting the pin 17.

Similarly, the bottom of the corner recesses 18a, 18b can be defined by the upper surface 24a, 24b of a corresponding second insert 25a, 25b which is inserted in a respective and complementarily-shaped second cavity 26a, 26b of the impression 15 of the first half-mold 14.

This second insert 25a, 25b can have a respective seat 19a, 19b for the insertion of a hinge 5a, 5b.

It should be noted that, by virtue of the presence of the inserts 21, 25a, 25b, depending on the desired thickness for the raised portions 12, 13a, 13b of the strip 11, it is sufficient to insert inserts 21, 25a, 25b in the impression 15 which are of sufficient height, in this way being able to vary the shape and the relative dimensions between the regions of the strip 11 while always using the same mold, without the need to have multiple molds for different thicknesses.

In practice it has been found that the invention fully achieves the intended aim and objects by providing a blank for the production of eyeglasses and a method for its provision that make it possible to provide the frame, and in particular the front, more simply and more rapidly than similar, conventional blanks.

According to the invention a blank for the production of eyeglasses and a method for its provision have been developed that require less storage space for storing the materials prior to their processing.

Furthermore, according to the invention a blank for the production of eyeglasses and a method for its provision have been provided that generate less waste of material and also less environmental pollution with respect to similar methods and conventional blanks.

The invention thus conceived is susceptible of numerous modifications and variations, all of which are within the scope of the appended claims. Moreover, all the details may be substituted by other, technically equivalent elements.

In practice the materials employed, provided they are compatible with the specific use, and the contingent dimensions and shapes, may be any according to requirements and to the state of the art.

The disclosures in Italian Patent Application No. 102022000008885 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A blank (10) for the production of eyeglasses, made of cellulose acetate, constituted by a strip (11) having a rectangular profile and dimensions that are substantially comparable with those of a front (1) of a frame (2) for eyeglasses, said blank (10) being **characterized in that** said strip (11) is injection-molded and has regions (12, 13a, 13b) with different thicknesses.

2. The blank (10) according to claim 1, **characterized in that**, considering the longitudinal direction of said strip (11), said strip has at least one central raised portion (12).

3. The blank (10) according to claim 2, **characterized in that** said central raised portion (12) has a rectangular contour and a transverse extension that is equal to the transverse extension of said strip (11).

4. The blank (10) according to one or more of the preceding claims, **characterized in that** said central raised portion (12) has a thickness that is sufficient to obtain the bridge (3) and the nosepads (4) of said frame (2) for eyeglasses by removal of material.

5. The blank (10) according to one or more of the preceding claims, **characterized in that** said central raised portion (12) has a hole that passes through its thickness.

6. The blank (10) according to one or more of the preceding claims, **characterized in that**, considering the longitudinal direction of said strip (11), said strip has two opposite and mirror-symmetrical corner raised portions (13a, 13b), each one of said corner raised portions (13a, 13b) being at a corresponding longitudinal end of said strip (11) and extending from the same face from which said central raised portion (12) extends.

7. The blank (10) according to claim 6, **characterized in that** said corner raised portions (13a, 13b) have a quadrangular contour and a transverse extension that is smaller than the transverse extension of said strip (11).

8. The blank (10) according to claim 7, **characterized in that** said corner raised portions (13a, 13b) have:
- a thickness that is sufficient to provide insertion seats for hinges (5a, 5b) for articulating the temples (6a, 6b) to said front (1) of said frame (2) for eyeglasses,
- and/or said hinges (5a, 5b).

9. A method for providing a blank (10) according to one or more of the preceding claims, **characterized in that** it consists in:
- injecting liquefied cellulose acetate into a mold which comprises two complementary and mated half-molds, of which a first half-mold (14) has at least one impression (15) having a substantially rectangular contour with dimensions that are compatible with those of said front (1) of said frame (2) for eyeglasses, said impression (15) having, considering its direction of longitudinal extension, at least one central recess (16) for the provision of said central raised portion (12) of said strip (11) that is shaped complementarily thereto,
- waiting for the solidification time of said cellulose acetate, thus obtaining said blank (10),
- opening said mold and extracting said blank (10).

10. The method according to claim 9, **characterized in that** in said central recess (16) there is a pin (17) for the provision of said hole which passes through the thickness of said central raised portion (12) of said strip (11).

11. The method according to claim 9 or 10, **characterized in that** said impression (15) has, considering its direction of longitudinal extension, two opposite and mirror-symmetrical corner recesses (18a, 18b) for the provision of said corner raised portions (13a, 13b) of said strip (11) that are shaped complementarily thereto.

12. The method according to claim 11, **characterized in that** said recesses (18a, 18b) are provided with seats (19a, 19b) for the insertion of said hinges (5a, 5b) and there is a step of insertion of said hinges (5a, 5b) in said seats (19a, 19b) prior to the injection of said liquefied cellulose acetate into said mold.

13. The method according to one or more of claims 9 to 12, **characterized in that**:
- the bottom of said central recess (16) is defined by the upper surface (19) of a corresponding first insert (20) which is inserted in a respective and complementarily-shaped first cavity (22) of said impression (15) of said first half-mold (14),
- and/or the bottom of said corner recesses (18a, 18b) is defined by the upper surface (24a, 24b) of a corresponding second insert (25a, 25b) which is inserted in a respective and complementarily-shaped second cavity (26a, 26b) of said impression (15) of said first half-mold (14).
